# FASCICULE DE BREVET EUROPEEN

(11) **EP 2 461 937 B1**
(45) Date de publication et mention de la délivrance du brevet: **02.10.2013**
(21) Numéro de dépôt: 10740227.3
(22) Date de dépôt: 05.08.2010
(51) Int. Cl.: B23P 13/02, B23P 15/00, B24C 1/04, B23C 3/18, F01D 5/34

(54) **PROCÉDÉ OPTIMISÉ DE FABRICATION D'UN DISQUE AUBAGÉ MONOBLOC PAR JET D'EAU ABRASIF**
OPTIMIERTES VERFAHREN ZUR HERSTELLUNG EINES INTEGRAL BESCHAUFELTEN ROTORS MITTELS ABRASIVWASSERSTRAHLSCHNEIDEN
OPTIMISED METHOD FOR PRODUCING A ONE-PIECE BLADED DISC (BLISK) BY ABRASIVE WATER-JET CUTTING

(30) Priorité: 07.08.2009 FR 0955575
(43) Date de publication de la demande: 13.06.2012
(73) Titulaire: Snecma, 75015 Paris (FR)
(72) Inventeur: DE LA RUPELLE, Perrine, F-75020 Paris (FR); BERLANGER, Serge, 91310 Leuville Sur Orge (FR); MILLER, Mitch, South Carolina 29710 (US); PEARSON, William, South Carolina 29710 (US); STROMBERG, Mark, South Carolina 29710 (US)
(74) Mandataire: Ilgart, Jean-Christophe
(86) Numéro de dépôt international: PCT/EP2010/061422
(87) Numéro de publication internationale: WO 2011/015626

(56) Documents cités:
- EP-A2- 1 652 611
- FR-A1- 2 699 850
- GB-A- 2 454 187
- US-A- 5 704 824
- US-B1- 6 276 899

## Description

### DOMAINE TECHNIQUE

La présente invention se rapporte de façon générale au domaine de la fabrication des disques aubagés monoblocs, de préférence pour turbomachine d'aéronef. En particulier la présente invention concerne un procédé de fabrication d'un disque aubagé monobloc selon le préambule de la revendication 1. Un tel procédé est décrit dans le document EP 1 652 611 A2.

### ETAT DE LA TECHNIQUE ANTERIEURE

Pour la fabrication d'un disque aubagé monobloc, également dénommé « DAM », ou « blisk » en anglais, il est possible d'avoir recours à une étape de découpe par jet d'eau abrasif d'un bloc de matière, généralement suivie d'une ou plusieurs étapes de fraisage.

La mise en oeuvre d'une étape de découpe par jet d'eau abrasif, antérieurement au fraisage, permet de réduire les temps et coûts de fabrication par rapport à un procédé uniquement basé sur du fraisage. Cela s'explique en particulier par le fait qu'un tel procédé de fabrication requiert environ 75% de retrait de matière du bloc de départ pour aboutir au DAM. Le retrait d'une grande partie de cette matière par découpe au jet abrasif permet en effet de réduire les temps de production, et limite par ailleurs l'usure des fraiseuses.

Habituellement, l'étape de découpe par jet d'eau abrasif consiste essentiellement en une découpe d'un morceau de forme extrêmement complexe, sur toute l'épaisseur du bloc de départ. Cette découpe suit en effet une trajectoire complexe, dite cinq axes, visant à découper un morceau de forme vrillée ou hélicoïdale, proche de la forme d'un espace inter-aubes.

L'inconvénient d'une telle étape réside dans le fait que la stabilité du jet d'eau abrasif est fortement impactée par la nature complexe de la trajectoire de ce jet, ainsi que par l'épaisseur importante à découper, puisque la qualité du jet se dégrade progressivement de l'entrée vers la sortie. Pour minimiser ce problème de stabilité du jet, il s'avère nécessaire de découper à des vitesses relativement lentes, ce qui se traduit par des temps opératoires toujours importants.

La durée de mise en oeuvre de cette étape de découpe par jet d'eau abrasif est également fortement allongée par la nécessité de retirer, manuellement, les morceaux de forme vrillée, qui restent logés dans le bloc de matière après leur découpe.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'un disque aubagé monobloc, comprenant une étape de découpe par jet d'eau abrasif d'un bloc de matière en forme générale de disque, réalisée de manière à retirer de la matière du bloc au niveau d'espaces inter-aubes pour faire apparaître des préformes d'aubes s'étendant radialement à partir d'un moyeu, ladite étape de découpe par jet d'eau abrasif comprenant, pour la réalisation de chaque espace inter-aubes :
- une première découpe trois axes d'un morceau traversant l'épaisseur du bloc, mise en oeuvre de sorte que ledit morceau découpé s'échappe du bloc automatiquement par gravité ; suivie
- d'au moins une découpe d'affinement.

L'invention permet essentiellement d'aboutir à une étape de découpe par jet d'eau abrasif fiable, d'obtenir des préformes d'aubes affinées, et de réduire la durée de mise en oeuvre de cette étape de découpe par jet d'eau abrasif, qui se traduit bien évidemment par une réduction de la durée de mise en oeuvre de l'ensemble du procédé de fabrication.

Concernant la durée de mise en oeuvre de cette étape, celle-ci est tout d'abord réduite par le fait que la première découpe traversante conduit à l'obtention d'un morceau qui s'échappe automatiquement par gravité, sans nécessiter l'intervention de l'opérateur. Cette fonctionnalité est obtenue par un positionnement particulier du bloc, agencé de préférence à l'horizontal, mais surtout grâce à la nature cylindrique du morceau obtenu par la découpe trois axes. Le nombre d'espaces inter-aubes étant important sur un DAM, le gain de temps résultant de la chute automatique des premiers morceaux est considérable.

En outre, la simplicité de la trajectoire de la première découpe renforce la stabilité du jet, et s'avère par conséquent propice à la mise en oeuvre d'une vitesse de découpe élevée pour cette première découpe traversante.

Par ailleurs, la ou les découpes d'affinement ultérieures peuvent s'effectuer sur des épaisseurs de matière plus faibles. Cela renforce la stabilité du jet, et réduit donc l'effet de déviation du jet. Les vitesses de découpe peuvent donc également être élevées, et la précision de la découpe renforcée.

Selon l'invention, il est prévu au moins une découpe d'affinement, depuis l'une quelconque des deux faces du bloc, visant à découper une zone quelconque du bloc préalablement obtenue par ladite première découpe traversante. Cette zone quelconque peut par exemple être celle qui subit le plus l'effet de déviation du jet d'eau abrasif rencontré lors de ladite première découpe, c'est-à-dire la zone proche de la sortie de jet. Néanmoins, puisque cette zone particulière est retravaillée par une découpe d'affinement, la déviation du jet durant la première découpe peut donc être importante sans qu'elle ne soit néfaste. Cela est également propice à la mise en oeuvre d'une vitesse de découpe élevée pour réaliser la première découpe.

De préférence, ladite étape de découpe par jet d'eau abrasif, réalisée à l'aide d'un outillage comportant une tête d'éjection d'un jet d'eau abrasif, comprend :
- ladite première découpe, réalisée avec ladite tête d'éjection en regard d'une première face du bloc ; suivie
- de plusieurs découpes d'affinement, dont au moins l'une d'entre elles est réalisée avec ladite tête d'éjection en regard de ladite première face du bloc, et dont au moins une autre d'entre elles est réalisée avec ladite tête d'éjection en regard d'une seconde face du bloc, opposée à la première.

Le fait de venir réaliser des découpes au jet d'eau abrasif depuis les deux faces du bloc de matière confère une meilleure accessibilité. Cela permet d'aboutir des préformes d'aubes au plus près des cotes finales, et donc de réduire les temps opératoires de fraisages ultérieurs, lorsque ceux-ci s'avèrent nécessaires. Aussi, c'est le temps global de fabrication du DAM qui est avantageusement réduit.

En outre, cette meilleure accessibilité aux surfaces à découper est non seulement mise à profit pour affiner les préformes d'aubes obtenues, mais également pour orienter le jet de la meilleure façon possible par rapport à chaque surface à découper, ce qui renforce la fiabilité du procédé.

Par ailleurs, il est noté que la multiplication des découpes d'affinement permet de réduire le temps global de mise en oeuvre de l'étape de découpe par jet d'eau abrasif. En effet, comme mentionné ci-dessus, la première découpe trois axes peut concerner une épaisseur maximale, tandis que chaque découpe d'affinement peut s'effectuer sur une épaisseur réduite du bloc, en suivant une trajectoire complexe, par exemple cinq axes. Ainsi, il est donc fait en sorte qu'un seul des deux paramètres contraignants en termes de stabilité de jet, à savoir l'épaisseur découpée et la complexité de trajectoire, ne soit retenu dans chacun des deux types de découpe, ce qui permet la mise en oeuvre de vitesses de découpe élevées pour chacun de ces deux types de découpe.

A titre d'exemple préféré, l'étape de découpe par jet d'eau abrasif comprend la première découpe traversante, entre deux et quatre découpes d'affinement du côté de la première face du bloc, et également entre deux et quatre découpes d'affinement du côté de la seconde face du bloc.

De préférence, durant ladite étape de découpe par jet d'eau abrasif visant à obtenir tous les espaces inter-aubes, il est successivement réalisé :
- l'ensemble des découpes avec ladite tête d'éjection en regard de la première face du bloc ;
- un déplacement relatif entre le bloc et la tête d'éjection pour amener celle-ci en regard de la seconde face du bloc ; et
- l'ensemble des découpes avec ladite tête d'éjection en regard de la seconde face du bloc.

Cela permet d'optimiser la durée de mise en oeuvre de l'étape de découpe par jet d'eau abrasif. De façon préférée, ledit déplacement relatif entre le bloc et la tête d'éjection s'effectue par retournement du bloc.

De préférence, ladite étape de découpe par jet d'eau abrasif est réalisée de manière à ce qu'au moins un morceau découpé lors d'une découpe d'affinement s'échappe du bloc automatiquement par gravité. Cela permet de limiter le nombre d'interventions de l'opérateur durant l'étape de découpe par jet d'eau abrasif, pour un temps de mise en oeuvre encore plus optimisé. A cet égard, les morceaux concernés, tout comme le morceau obtenu lors de la première découpe, sont prévus pour tomber par gravité dès leur désolidarisation du bloc, sans que celui-ci n'ait à être mis en mouvement.

De préférence, toujours pour limiter le nombre d'interventions de l'opérateur, ladite étape de découpe par jet d'eau abrasif est réalisée de manière à ce que, pour au moins un morceau découpé lors d'une découpe d'affinement et restant bloqué dans son espace inter-aubes associé après sa découpe, ledit morceau est scindé, par découpe par jet d'eau abrasif, en au moins deux sous-morceaux capables de s'échapper du bloc automatiquement par gravité.

Comme évoqué ci-dessus, chaque découpe d'affinement est préférentiellement une découpe cinq axes.

De préférence, ladite étape de découpe par jet d'eau abrasif du bloc de matière est réalisée de manière à faire apparaître les préformes d'aubes s'étendant radialement à partir du moyeu, tout en conservant de la matière formant moyens de liaison entre au moins deux préformes d'aubes directement consécutives, lesdits moyens de liaison étant espacés radialement dudit moyeu.

Ainsi, ce mode de réalisation préféré est remarquable en ce qu'il prévoit, au cours de l'étape de découpe par jet d'eau abrasif, de laisser apparaître des moyens de liaison entre au moins deux préformes d'aubes, et de préférence entre toutes ces préformes d'aubes. Cela permet de limiter fortement, voire d'éradiquer les déformations et les vibrations des aubes au cours de leur fabrication, étant donné qu'elles demeurent maintenues mécaniquement les unes aux autres par de la matière du bloc initial.

Cette spécificité permet avantageusement d'appliquer aux différents outillages des vitesses d'avance élevées, diminuant les temps de production, sans impacter la qualité du DAM produit. Par ailleurs, la diminution des temps de production, ainsi que la diminution des vibrations des aubes au cours de leur fabrication, ralentit l'usure des outillages, en particulier l'usure des fraiseuses, ce qui limite de façon avantageuse les coûts de production.

De préférence, l'étape de découpe par jet d'eau abrasif est réalisée de manière à ce que lesdits moyens de liaison relient entre elles un nombre de préformes d'aubes strictement supérieur à trois, de préférence directement consécutives. Néanmoins, il pourrait être envisagé plusieurs ensembles de préformes directement consécutives reliées les unes aux autres, mais avec les ensembles non reliés entre eux. Quoi qu'il en soit, en fonction des besoins rencontrés, le nombre de préformes d'aubes maintenues les unes aux autres par les moyens de liaison, ainsi que la disposition de ces derniers sur les préformes, peuvent être adaptés.

Selon une réalisation préférée, l'étape de découpe par jet d'eau abrasif est réalisée de manière à ce que lesdits moyens de liaison forment sensiblement un anneau, de préférence centré sur l'axe du disque. Préférentiellement, cet anneau s'étend sur 360°, en étant éventuellement uniquement interrompu par les préformes d'aubes qu'il relie. Néanmoins, comme évoqué ci-dessus, cet anneau pourrait ne pas être entièrement fermé, à savoir ne pas relier certaines préformes directement consécutives.

Cependant, l'étape de découpe par jet d'eau abrasif est préférentiellement réalisée de manière à ce que ledit anneau relie entre elles la totalité des préformes d'aubes, chacune destinée à constituer ultérieurement une aube du DAM. Dans un tel cas, on prévoit de préférence que l'étape de découpe par jet d'eau abrasif est réalisée de manière à ce que ledit anneau relie entre elles les têtes des préformes d'aubes. L'anneau forme alors une portion annulaire périphérique du bloc découpé, avec les préformes d'aubes s'étendant radialement vers l'intérieur à partir de cet anneau, en direction du disque.

Néanmoins, une solution alternative pourrait consister à prévoir l'étape de découpe par jet d'eau abrasif réalisée de manière à ce que ledit anneau relie entre elles lesdites préformes d'aubes, à distance de leur tête, radialement vers l'intérieur. Dans un tel cas, il est par exemple envisagé que l'anneau relie les préformes entre elles à environ mi-longueur.

Il est précisé que les deux solutions proposées ci-dessus peuvent être combinées, à savoir prévoir à la fois un anneau de maintien périphérique, ainsi qu'un anneau de maintien intérieur situé radialement intérieurement par rapport à l'anneau périphérique. De façon plus générale, lorsqu'il est prévu un anneau de maintien périphérique, il peut être prévu des moyens de liaison additionnels entre les préformes d'aubes, non-nécessairement en forme d'anneau, sans sortir du cadre de l'invention.

De préférence, le procédé comprend également :
- une étape de fraisage des préformes d'aubes réalisée de manière à obtenir des ébauches d'aubes mises à profil ; et
- une étape de finition par fraisage des ébauches d'aubes, de manière à obtenir les aubes au profil final.

De préférence, la matière formant moyens de liaison est conservée jusqu'à la fin de l'étape de finition par fraisage, à la suite de laquelle cette matière est alors retirée. Néanmoins, cette matière pourrait être retirée préalablement, sans sortir du cadre de l'invention.

Bien entendu, d'autres étapes classiques peuvent être mises en oeuvre dans le procédé selon l'invention, telles que :
- le tournage du bloc de matière avant l'étape de découpe par jet d'eau abrasif ;
- le polissage et/ou le grenaillage des aubes après l'étape de finition ;
- la mise à longueur des aubes ;
- et l'équilibrage du DAM.

De préférence, ledit disque aubagé monobloc présente un diamètre supérieur ou égal à 800 mm. A cet égard, il est précisé que la présence des moyens de liaison maintenant les aubes entre elles pendant leur fabrication permet d'envisager la fabrication de DAMs de grands diamètres, avec des aubes de grandes longueurs, puisque les déformations et vibrations de celles-ci sont réduites, voire supprimées. De préférence, les aubes ont une longueur minimale de 150 mm.

De préférence, ledit disque aubagé monobloc présente un disque d'épaisseur supérieure ou égale à 100 mm. Néanmoins, il peut présenter une épaisseur de l'ordre de 160 mm, voire plus encore, en raison des hautes performances susceptibles d'être atteintes par la technique de découpe par jet d'eau abrasif. Cette épaisseur correspond également sensiblement à la distance selon laquelle s'étend chaque aube, rapportée selon l'axe du DAM, entre le bord d'attaque et le bord de fuite.

De préférence, les aubes du disque aubagé monobloc sont vrillées, l'angle de vrillage pouvant aller jusqu'à 45°, voire plus encore.

De préférence, ledit bloc de matière utilisé est en titane ou l'un de ses alliages.

De préférence, ledit disque aubagé monobloc est un disque aubagé monobloc pour turbomachine d'aéronef.

Encore plus préférentiellement, ledit disque aubagé monobloc est un disque aubagé monobloc de rotor de turbine ou de compresseur de turbomachine d'aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un disque aubagé monobloc pour turbomachine, capable d'être obtenu par la mise en oeuvre du procédé de fabrication selon la présente invention ;
- les figures 2a à 2m représentent des vues schématisant l'étape de découpe par jet d'eau abrasif du procédé de fabrication ; et
- les figures 3 à 5 représentent des vues schématisant les étapes ultérieures du procédé de fabrication.

### EXPOSÉ DÉTAILLÉ DE MODES DE RÉALISATION PRÉFÉRÉS

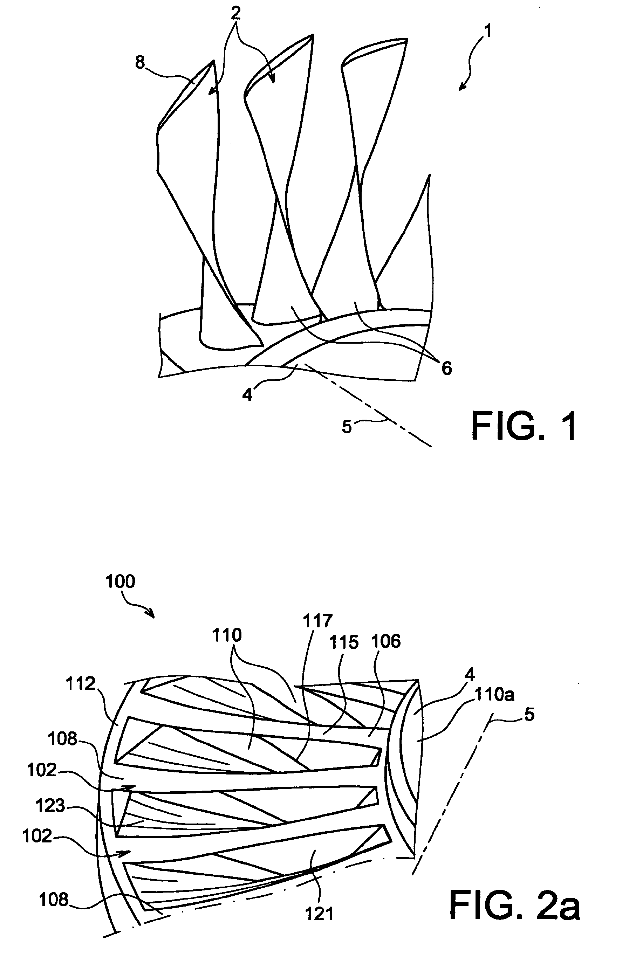

En référence tout d'abord à la figure 1, on peut voir un disque aubagé monobloc 1 destiné à être obtenu par la mise en oeuvre d'un procédé de fabrication selon la présente invention. Il est préférentiellement destiné à la constitution d'un rotor de compresseur ou de turbine d'une turbomachine pour aéronef.

Le disque aubagé monobloc, ci-après dénommé DAM, que l'on recherche à obtenir par le procédé objet de l'invention, est de grandes dimensions, à savoir qu'il présente un diamètre supérieur ou égal à 800 mm, des aubes 2 de longueur au moins égale à 150 mm, et un moyeu 4 d'épaisseur « e » supérieure ou égale à 130 mm. De plus, les aubes portées par le moyeu 4 d'axe central 5 sont vrillées de manière importante, puisque l'angle de vrillage peut atteindre 45°, voire plus. A titre informatif, cet angle correspond de manière connue à l'angle fictif entre le pied 6 et la tête 8 d'une même aube 2.

Un mode de réalisation préféré du procédé de fabrication du DAM 1 va maintenant être décrit en référence aux figures suivantes.

Tout d'abord, un bloc de matière en alliage de titane, également dénommé « brut monobloc » et de préférence pré-usiné, subit une première étape de tournage, visant par exemple à usiner ce bloc à 1 mm des cotes finales.

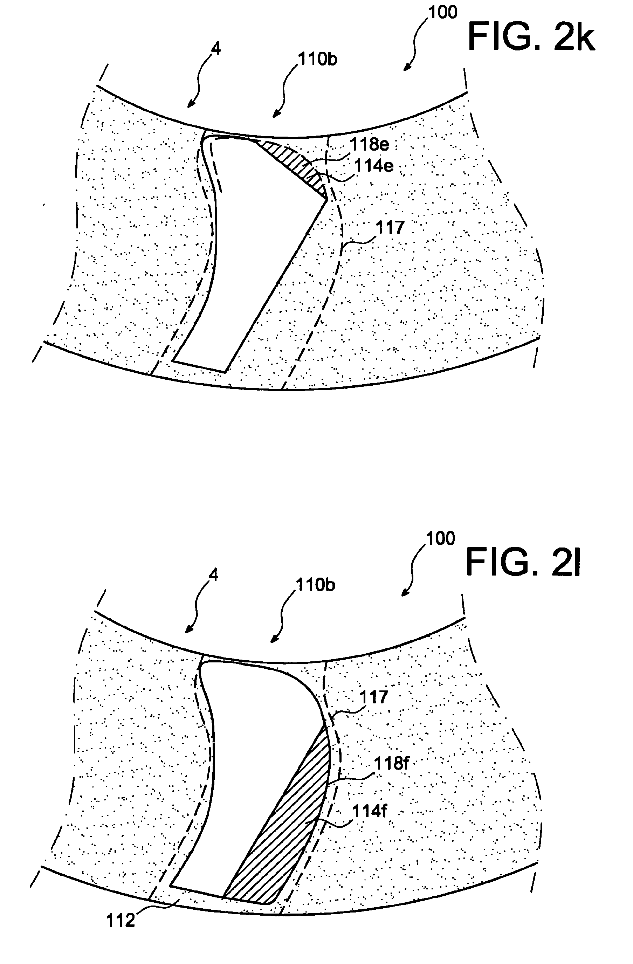

L'étape suivante, schématisée sur les figures 2a à 2m, consiste en une découpe par jet d'eau abrasif du bloc plein, de manière à faire apparaître des préformes d'aubes séparées par des espaces inter-aubes.

Pour ce faire, il est utilisé un outillage (non représenté) de découpe par jet d'eau à très haute pression, par exemple 3000 bars, et très haute précision, par exemple à six axes. C'est le très haut niveau de pression de l'eau qui permet de véhiculer l'abrasif en optimisant son effet coupant sur la matière. De manière connue, le jet d'eau est créé par l'intermédiaire d'une buse en diamant ou en saphir. De plus, une chambre de mélange permet l'addition de l'abrasif, tel que du sable. A cet égard, un canon de focalisation homogénéise l'eau et le sable en focalisant ce dernier sur la zone à découper. Dans toute la description qui va suivre, le canon de focalisation 116 sera plus généralement dénommé tête d'éjection de l'outillage.

Cette technique de découpe par jet abrasif permet un débit de retrait de matière important, ainsi qu'une bonne répétatibilité. Il se révèle ainsi tout à fait adapté au retrait de matière visant à créer des espaces inter-aubes traversant entièrement l'épaisseur « e » du bloc de matière selon son axe 5.

A cet égard, la figure 2a montre une partie du bloc de matière 100, une fois l'étape de découpe par jet d'eau abrasif achevée. Ce bloc présente donc des préformes d'aubes 102 s'étendant radialement à partir du moyeu 4, c'est-à-dire orthogonalement à l'axe central 5. D'une manière générale, la découpe est réalisée dans l'épaisseur du bloc 100 de sorte à faire apparaitre des espaces inter-aubes 110 entre les préformes d'aubes 102 directement consécutives circonférentiellement.

De plus, elle est réalisée de manière à laisser apparaître des moyens de liaison entre les préformes 102, prenant ici la forme d'un anneau 112 centré sur l'axe 5 et reliant de préférence la totalité des têtes 108 des préformes d'aubes 102. Ainsi, l'anneau 112 constitue une portion annulaire périphérique du bloc découpé 100, et crée par conséquent une délimitation radiale extérieure des espaces inter-aubes 110.

Cette étape de découpe par jet d'eau abrasif est mise en oeuvre en effectuant des découpes réalisées avec la tête d'éjection 116 en regard d'une première face 110a du bloc en forme de disque, puis en effectuant des découpes réalisées avec la tête d'éjection 116 en regard d'une seconde face 110b de ce même bloc, opposée à la première surface 110a.

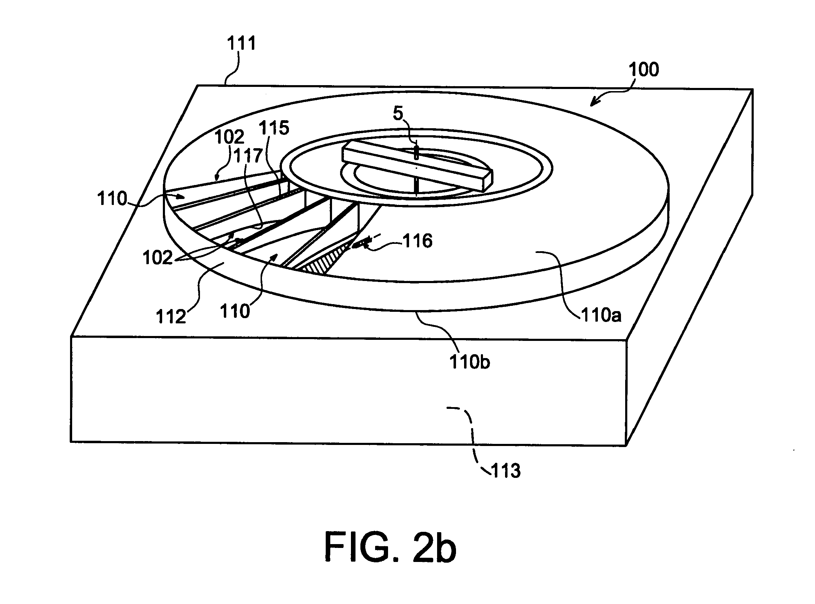

Pour opérer les découpes depuis la première face 110a, le bloc 100 est maintenu fixement, de manière amovible, sur un support 111 de manière à adopter une position sensiblement horizontale, c'est-à-dire avec son axe 5 sensiblement orthogonal au sol, comme montré sur la figure 2b. Le support 111 présente un réceptacle 113, ouvert vers le haut, dédié à la récolte des morceaux découpés qui s'échappent automatiquement par gravité du bloc 100. Lors de ces découpes, la seconde face 110b est donc plaquée contre le support 111.

Pour opérer les découpes depuis la seconde face 110b, le bloc 100 est libéré du support 111, retourné à 180°, puis fixé à nouveau sur ce support 111 avec la première face 110a plaquée contre ce dernier, et la seconde face 110b orientée vers le haut pour pouvoir coopérer avec la tête d'éjection 116 de l'outillage se déplaçant au-dessus du bloc 110.

Il est noté que dans le mode de réalisation préféré représenté, le bord d'attaque 115 des préformes d'aubes 102 se situe du côté de la première face 110a, tandis que leur bord de fuite 117 se situe du côté de la seconde face 110b.

De moyens d'indexation (non représentés) permettent de positionner précisément le bloc 100 sur le support 111, dans ses deux positions, pour une meilleure fiabilité du processus.

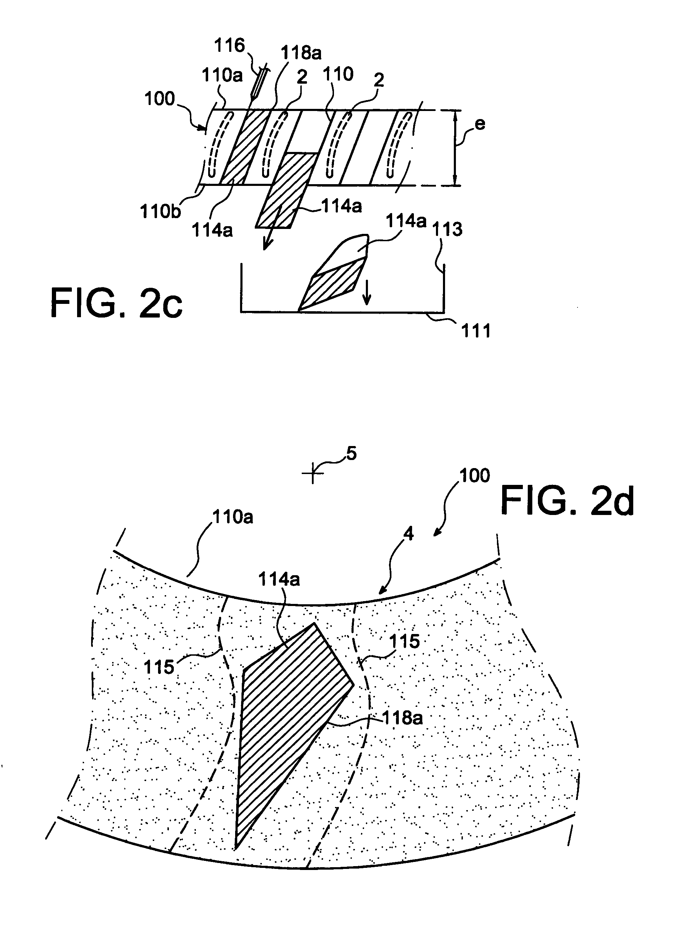

En référence à la figure 2c, une première découpe, réalisée depuis la première face 110a, vise à retirer un premier morceau de matière 114a s'étendant de manière sensiblement cylindrique, puisque résultant d'une découpe dite trois axes, durant laquelle la tête d'éjection est donc uniquement déplacée selon trois axes de translation orthogonaux les uns aux autres. Dans ce cas de figure, l'un des trois axes constitue l'axe longitudinal de la forme cylindrique du morceau obtenu 114a, qui s'étend sur toute l'épaisseur du bloc 100. Il est noté que l'outillage étant à six axes, il permet de réaliser la trajectoire trois axes avec une inclinaison quelconque de la tête d'éjection 116, inclinaison qui est donc conservée durant toute la découpe. Comme le montre la figure 2c, la première découpe trois axes est réalisée avec la tête d'éjection du jet 116 inclinée par rapport à la verticale, de manière à être sensiblement orientée parallèlement à l'espace inter-aubes final désiré.

Cette première découpe, réalisée à une vitesse élevée rendue possible notamment grâce à sa trajectoire simple, présente un volume important, correspondant de préférence entre 40 et 80 % du volume final de l'espace inter-aubes associé 110 obtenu à la fin de l'étape de découpe par jet d'eau abrasif.

En référence à la représentation schématique de la figure 2d, sur laquelle les bords d'attaque 115 de deux préformes d'aubes successives à obtenir ont été schématisés, on peut voir que la première opération de découpe trois axes vise en effet à découper le premier morceau de matière 114a en déplaçant la tête d'éjection du jet le long d'une ligne fermée 118a passant proche du moyeu 4, ainsi qu'à proximité de l'extrémité radiale extérieure du bloc, sans atteindre celle-ci de manière à laisser de la matière pour la formation de l'anneau. Globalement, la ligne 118a présente la forme de deux V en regard et raccordés l'un à l'autre, l'une des pointes étant orientée radialement vers l'intérieur et située à proximité du moyeu 4, et l'autre pointe étant orientée radialement vers l'extérieur et située à proximité de l'extrémité radiale extérieure du bloc.

Dès que la ligne 118a se referme, impliquant la fin de la première étape de découpe et une désolidarisation du premier morceau 114a du bloc 100, ce morceau 114a s'échappe automatiquement par gravité de ce même bloc. En effet, comme schématisé sur la figure 2c, sous le seul effet de la gravité, le morceau 114a coulisse vers le bas dans la direction de la tête d'éjection 116, par rapport à l'orifice traversant 119 qu'il libère en tombant. Il finit sa chute dans le réceptacle 113 judicieusement positionné, et ne requiert donc aucune intervention de l'opérateur.

Comme cela est visible sur cette même figure, en section quelconque orthogonale à la direction radiale, le premier morceau 114a prend la forme globale d'un parallélogramme dont les deux côtés opposés, s'étendant selon l'épaisseur du bloc, passent respectivement à proximité des deux aubes directement consécutives 2 destinées à être obtenues une fois le procédé achevé.

Toujours depuis la première face 110a du bloc 100, il est ensuite réalisé une pluralité de découpes d'affinement par jet d'eau abrasif, afin de s'approcher au plus près des cotes finales. Toutes les découpes d'affinement ultérieures, qu'elles soient réalisées depuis la première face 110a ou la seconde face 110b, sont de préférence des découpes de formes complexes dites cinq axes, c'est-à-dire que la trajectoire est obtenue en déplaçant la tête d'éjection non seulement selon trois degrés de liberté de translation, mais également selon deux degrés de liberté de rotation. De plus, ces découpes d'affinement s'effectuent préférentiellement sur des épaisseurs faibles, sur toute ou partie de l'épaisseur du bloc. A cet égard, certaines découpes d'affinement conduisent à l'obtention d'un morceau dont une partie correspond à toute l'épaisseur du bloc, et dont une autre partie ne s'étend que sur une fraction de l'épaisseur de ce même bloc, dont l'épaisseur diminue généralement en allant radialement vers l'extérieur.

Ainsi, il est donc fait en sorte qu'un seul des deux paramètres contraignants en termes de stabilité de jet, à savoir l'épaisseur découpée et la complexité de trajectoire, ne soit retenu pour la première découpe et les découpes d'affinement, ce qui permet la mise en oeuvre de vitesses de découpe élevées pour chacun de ces deux types de découpe.

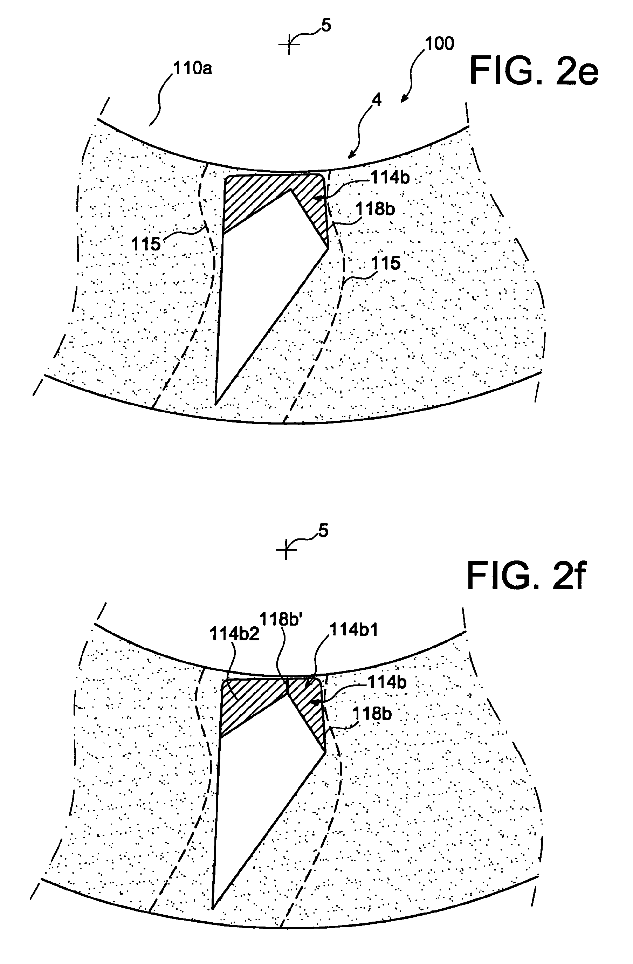

Une découpe d'affinement d'un second morceau 114b est alors opérée en déplaçant la tête d'éjection du jet le long d'une ligne ouverte 118b passant proche du moyeu 4, et présentant globalement la forme d'un U ouvert radialement vers l'extérieur et dont la base suit le moyeu 4. Les deux extrémités du U s'étendent respectivement jusqu'aux deux jonctions des deux V formés par la première découpe, comme le montre la figure 2e.

Le second morceau s'étend en grande partie sur toute l'épaisseur du bloc, et présente une forme complexe. Pour cette raison, il reste bloqué dans son espace inter-aubes associé après sa découpe. Aussi, pour assurer son échappement du bloc, le second morceau 114b est scindé, par découpe par jet d'eau abrasif, en deux sous-morceaux 114b1, 114b2 capables de s'échapper du bloc automatiquement par gravité, en traversant l'espace inter-aubes en formation. Ici encore, c'est donc sous le seul effet de la gravité que les deux sous-morceaux 114b1, 114b2 tombent vers le bas en finissant leur chute dans le réceptacle du support. Dans le mode de réalisation représenté, la ligne de découpe 118b' du morceau 118 prend la forme d'une ligne droite de faible longueur, initiée depuis la pointe du V intérieur de la découpe précédente, comme cela est montré sur la figure 2f.

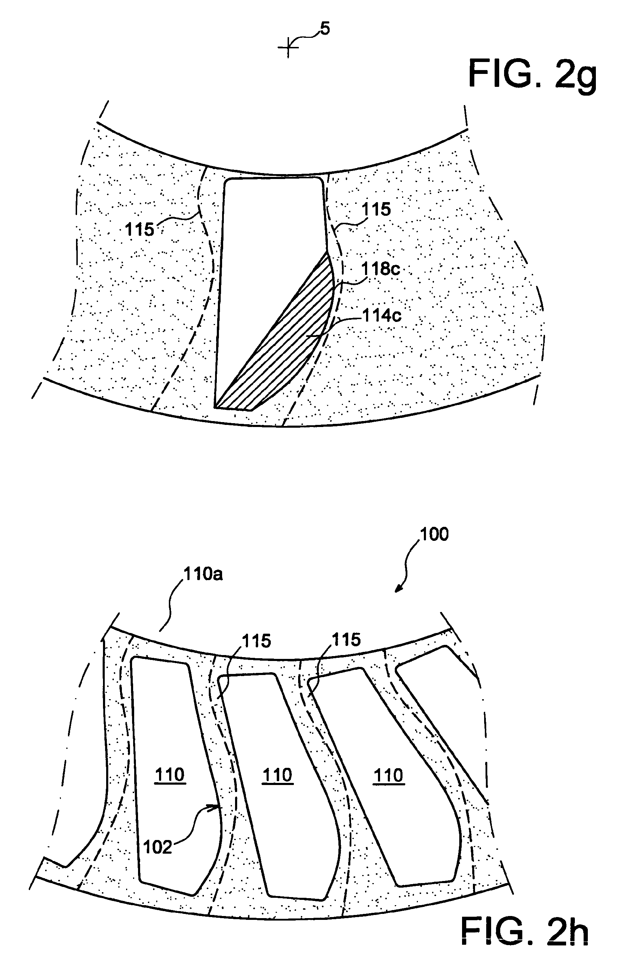

Une découpe d'affinement d'un troisième morceau 114c est ensuite opérée en déplaçant la tête d'éjection du jet le long d'une ligne ouverte 118c partant de la pointe du V extérieur de la première découpe, puis passant au plus près du bord d'attaque 115 de l'une des préformes d'aubes, pour ensuite rejoindre l'une des deux jonctions des deux V formés par la première découpe, comme le montre la figure 2g.

Le troisième morceau 114c s'étend en grande partie sur toute l'épaisseur du bloc, depuis la tête d'aube et sur une partie seulement de la longueur radiale de la préforme d'aube. Il est préférentiellement retiré manuellement, ou, selon sa forme, tombe également automatiquement par gravité dans le réceptacle du support.

La figure 2h montre le bloc 100 une fois que toutes les découpes depuis la première face 110a ont été opérées. De préférence, il est fait en sorte de découper chacun des trois morceaux 114a, 114b, 114c d'une espace inter-aubes 110 avant de passer à la découpe de l'espace inter-aubes suivant, même s'il pourrait en être autrement, sans sortir du cadre de l'invention.

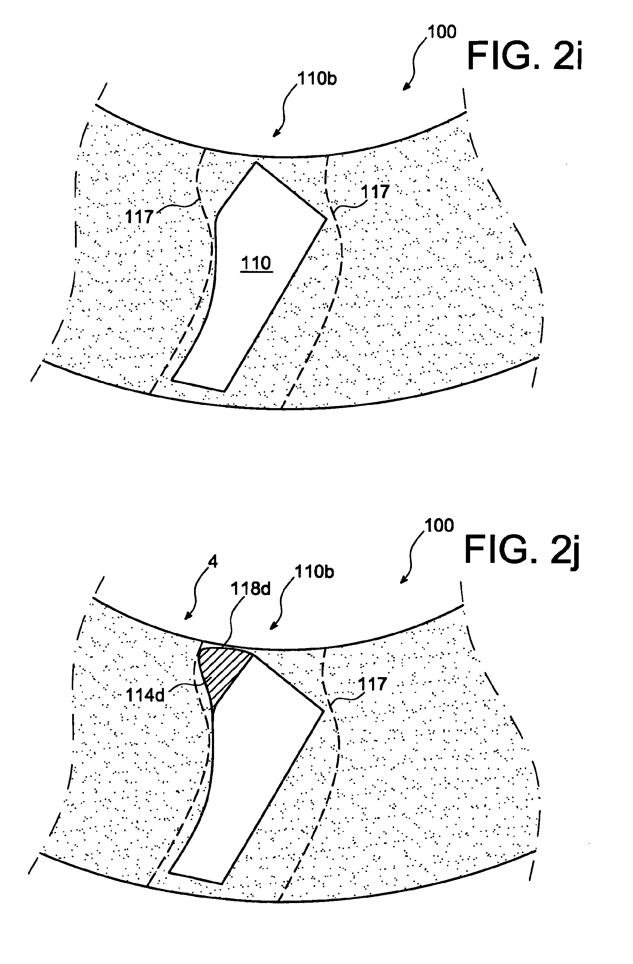

Ensuite, le bloc 100 est retourné sur son support, pour permettre la réalisation de découpes d'affinement par jet d'eau abrasif depuis la seconde face 110b. Ces découpes permettent donc d'affiner la forme des espaces inter-aubes 110 dont l'un est montré sur la figure 2i, tel qu'obtenu après les découpes réalisées depuis la première face 110a. Tous les morceaux découpés tombent automatiquement par gravité dans le réceptacle du support.

Il s'agit tout d'abord d'une découpe d'affinement d'un quatrième morceau 114d opérée en déplaçant la tête d'éjection du jet le long d'une ligne ouverte 118d de la figure 2j, suivant une partie du moyeu 4 et longeant une partie du bord de fuite 117 de l'une des préformes d'aubes. Il s'agit ensuite d'une découpe d'affinement d'un cinquième morceau 114e en déplaçant la tête d'éjection du jet le long d'une ligne ouverte 118e passant proche du moyeu 4, et présentant globalement la forme d'un U ouvert radialement vers l'extérieur et dont la base suit le moyeu 4, comme montré sur la figure 2k. Cette découpe ne s'effectue que sur une partie de l'épaisseur du bloc 100. Enfin, il est réalisé une découpe d'affinement d'un sixième morceau 114f en déplaçant la tête d'éjection du jet le long d'une ligne ouverte 118f partant de l'extrémité radiale du bloc pour délimiter l'anneau 112, puis passant au plus près du bord de fuite 117 de l'une des préformes d'aubes, pour ensuite rejoindre l'une des deux jonctions des deux V formés par la première découpe, comme le montre la figure 2g.

Une fois toutes ces découpes réalisées, le bloc ne présente plus que les préformes d'aubes 102 rattachées entre elles au niveau de leur tête 108, par l'anneau 112. L'étape de découpe par jet d'eau abrasif est alors achevée.

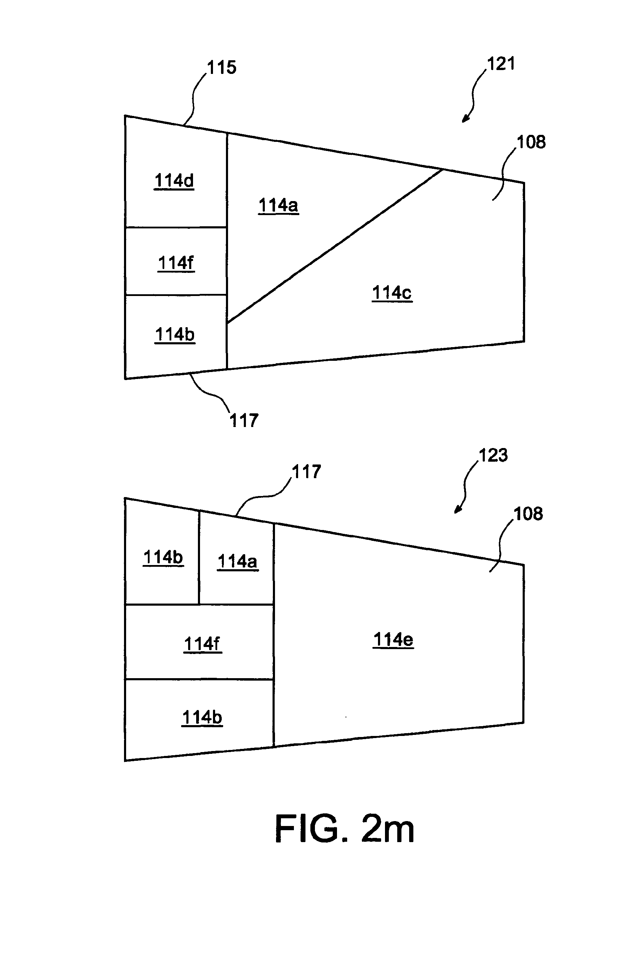

Chaque préforme d'aube 102 ainsi obtenue présente donc une surface extrados 121 et une surface intrados 123, comme montré sur la figure 2a. A cet égard, il est noté que chacune des surface extrados 121 et surface intrados 123 est composée par des portions de surfaces résultant des différentes découpes. La figure 2m montre schématiquement la segmentation de chacune de ces deux surfaces 121, 123 représentées à plat, chaque portion de surface portant la valeur numérique du morceau découpé qui l'a fait apparaître.

Ensuite, le procédé de fabrication est poursuivi par la mise en oeuvre d'une étape de fraisage des préformes d'aubes 102, réalisée de manière à obtenir des ébauches d'aubes 202 mises à profil. En d'autres termes, l'objectif de cette étape, mise en oeuvre par exemple à l'aide d'un outillage de fraisage à cinq axes, est de retirer la matière restante sur les préformes d'aubes 102, afin d'arriver au plus proche des cotes finales, par exemple à 0,6 mm. Grâce à la forme très affinée des préformes 102 obtenues suite à l'étape de découpe par jet d'eau abrasif, au moins une partie de la surface de ces préformes se trouve déjà au profil souhaité, et ne requiert donc pas un tel fraisage.

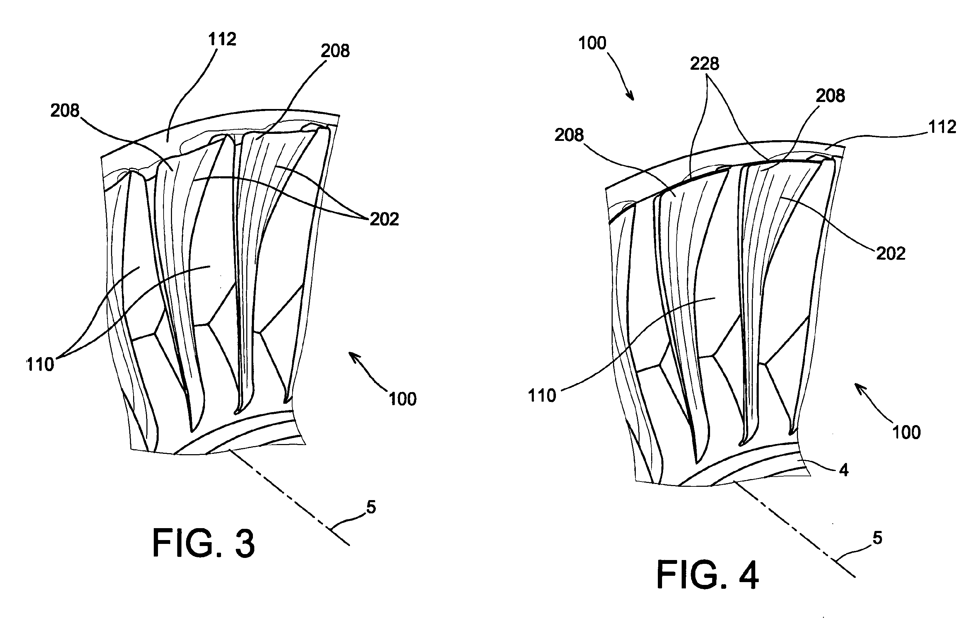

Ici, les préformes 102 sont préférentiellement usinées les unes après les autres, pour former chacune une ébauche d'aube 202 mise à profil, comme représenté sur la figure 3 montrant par ailleurs les têtes 208 des ébauches 202 reliées entre elles par l'anneau 112, formant toujours portion annulaire périphérique du bloc 100.

Le procédé est ensuite poursuivi par une étape de retrait de l'anneau 112 reliant les préformes 112. Cette étape est réalisée de manière quelconque réputée appropriée par l'homme du métier, comme la découpe au fil ou le fraisage. A cet égard, la figure 4 montre schématiquement la désolidarisation de l'anneau 112 du reste du bloc 100, par rupture de la liaison entre cet anneau 112 et les têtes 208 des ébauches. Une fois toutes ces ruptures sensiblement circonférentielles 228 obtenues, l'anneau peut effectivement être extrait du bloc par déplacement relatif selon l'axe 5 vis-à-vis de ce dernier. L'anneau 112 est alors considéré comme supprimé. Ici aussi, alternativement, il pourrait être procédé au retrait de l'anneau 112 par la seule suppression des portions de ce dernier situées entre les ébauches 202, les autres portions situées à l'extrémité radiale de ces ébauches étant alors conservées, par exemple en vue de constituer ultérieurement une partie des têtes d'aubes. Les ruptures recherchées ne sont alors plus sensiblement circonférentielles comme les ruptures 228 de la figure 2d, mais sensiblement radiales, et toujours dans l'épaisseur du bloc.

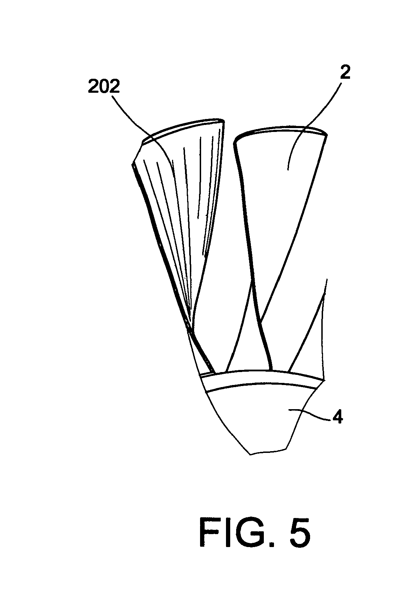

Ensuite, il est mis en oeuvre une nouvelle étape de fraisage, cette étape dite de finition visant à obtenir, par fraisage, les aubes 2 au profil final, à partir des ébauches 202. L'outillage utilisé permet un usinage plus précis, assurant la mise aux cotes finales, et donc l'obtention des aubes 2 comme cela est montré sur la partie droite de la figure 5.

A ce stade du procédé, le bloc de matière restant présente un volume inférieur à 25% du volume de ce même bloc tel qu'il se présentait juste avant l'initiation de l'étape de découpe au jet d'eau abrasif, à savoir juste après l'étape précitée de tournage.

En outre, le procédé peut être poursuivi par une ou plusieurs étapes classiques, parmi lesquelles on compte, comme indiqué ci-dessus, une étape de polissage, une étape de grenaillage, une étape de mise à longueur des aubes, et/ou une étape d'équilibrage du DAM.

## Revendications

1. Procédé de fabrication d'un disque aubagé monobloc (1), comprenant une étape de découpe par jet d'eau abrasif d'un bloc de matière (100) en forme générale de disque, réalisée de manière à retirer de la matière du bloc au niveau d'espaces inter-aubes (110) pour faire apparaître des préformes d'aubes (102) s'étendant radialement à partir d'un moyeu (4), étant caractérisée en ce ladite étape de découpe par jet d'eau abrasif comprend, pour la réalisation de chaque espace inter-aubes (110) :
- une première découpe trois axes d'un morceau (114a) traversant l'épaisseur du bloc (100), mise en oeuvre de sorte que ledit morceau découpé s'échappe du bloc (100) automatiquement par gravité ; suivie
- d'au moins une découpe d'affinement.

2. Procédé de fabrication selon la revendication 1, dans lequel ladite étape de découpe par jet d'eau abrasif, réalisée à l'aide d'un outillage comportant une tête d'éjection (116) d'un jet d'eau abrasif, comprend :
- ladite première découpe, réalisée avec ladite tête d'éjection en regard d'une première face (110a) du bloc ; suivie
- de plusieurs découpes d'affinement, dont au moins l'une d'entre elles est réalisée avec ladite tête d'éjection en regard de ladite première face (110a) du bloc, et dont au moins une autre d'entre elles est réalisée avec ladite tête d'éjection en regard d'une seconde face (110b) du bloc, opposée à la première.

3. Procédé de fabrication selon la revendication 2, dans lequel, durant ladite étape de découpe par jet d'eau abrasif visant à obtenir tous les espaces inter-aubes, il est successivement réalisé :
- l'ensemble des découpes avec ladite tête d'éjection en regard de la première face du bloc (110a) ;
- un déplacement relatif entre le bloc (100) et la tête d'éjection (116) pour amener celle-ci en regard de la seconde face du bloc ; et
- l'ensemble des découpes avec ladite tête d'éjection en regard de la seconde face (110b) du bloc.

4. Procédé de fabrication selon la revendication 3, dans lequel ledit déplacement relatif entre le bloc et la tête d'éjection s'effectue par retournement du bloc (100).

5. Procédé de fabrication selon l'une quelconque des revendications précédentes, dans lequel ladite étape de découpe par jet d'eau abrasif est réalisée de manière à ce qu'au moins un morceau découpé lors d'une découpe d'affinement s'échappe du bloc automatiquement par gravité.

6. Procédé de fabrication selon l'une quelconque des revendications précédentes, dans lequel ladite étape de découpe par jet d'eau abrasif est réalisée de manière à ce que, pour au moins un morceau découpé lors d'une découpe d'affinement et restant bloqué dans son espace inter-aubes associé après sa découpe, ledit morceau est scindé, par découpe par jet d'eau abrasif, en au moins deux sous-morceaux capables de s'échapper du bloc automatiquement par gravité.

7. Procédé de fabrication selon l'une quelconque des revendications précédentes, dans lequel chaque découpe d'affinement est une découpe cinq axes.

8. Procédé de fabrication selon l'une quelconque des revendications précédentes, dans lequel ladite étape de découpe par jet d'eau abrasif du bloc de matière est réalisée de manière à faire apparaître les préformes d'aubes (102) s'étendant radialement à partir du moyeu (4), tout en conservant de la matière formant moyens de liaison (112) entre au moins deux préformes d'aubes directement consécutives, lesdits moyens de liaison étant espacés radialement dudit moyeu.

9. Procédé de fabrication selon l'une quelconque des revendications précédentes, dans lequel le procédé comprend également :
- une étape de fraisage des préformes d'aubes (102) réalisée de manière à obtenir des ébauches d'aubes (202) mises à profil ; et
- une étape de finition par fraisage des ébauches d'aubes (202), de manière à obtenir les aubes (2) au profil final.

## Patentansprüche

1. Verfahren zur Herstellung eines integral beschaufelten Rotors (1) mit einem Schritt des Abrasiv-Wasserstrahlschneidens eines Materialblocks (100) in der allgemeinen Form einer Scheibe, indem aus dem Block im Bereich der Zwischenräume der Zwischenschaufeln (110) Material herausgenommen wird, so dass Schaufel-Vorformen (102) erscheinen, die sich radial von einer Nabe (4) aus erstrecken, **dadurch gekennzeichnet, dass** der Schritt des Abrasiv-Waserstrahlschneiens zur Herstellung jedes -Zwischenraums der Zwischenschaufeln (110) folgendes aufweist:
- ein erstes dreiachsiges Schneiden eines Stückes (114a) durch die Dicke des Blockes (100), das derart ausgeführt wird, dass das abgeschnittene Stück durch die Schwerkraft automatisch von dem Block (100) herabfällt; gefolgt von
- mindestens einem Feinschneiden.

2. Herstellungsverfahren nach Anspruch 1, bei dem der Schritt des Abrasiv-Wasserstrahlschneidens, das mit Hilfe eines Werkzeuges durchgeführt wird, das einen Austrittskopf (116) für einen Abrasiv-Wasserstrahl besitzt, folgendes aufweist:
- das erste Schneiden, das mit dem Austrittskopf einer ersten Fläche (110a) des Blocks zugewandt durchgeführt wird; gefolgt von
- mehreren Feinschneid-Schritten, von denen mindestens einer mit dem Austrittskopf der ersten Fläche (110a) des Blockes zugewandt durchgeführt wird, und von denen mindestens ein weiterer von ihnen durchgeführt wird, wobei der Austrittskopf einer zweiten Fläche (110b) des Blockes zugewandt ist, die sich gegenüber der ersten Fläche befindet.

3. Herstellungsverfahren nach Anspruch 2, bei dem während des Schrittes des Abrasiv-Wasserstrahlschneidens mit dem Ziel, alle Zwischenschaufel-Zwischenräume zu erhalten, nacheinander folgendes durchgeführt wird:
- sämtliche Schnitte mit dem Austrittskopf, der der ersten Fläche des Blockes (110a) zugewandt ist;
- eine relative Verschiebung zwischen dem Block (100) und dem Austrittskopf (116), um diesen der zweiten Fläche des Blockes zugewandt anzuordnen; und
- sämtliche Schnitte mit dem Austrittskopf, der der zweiten Fläche (110b) des Blockes zugewandt ist.

4. Herstellungsverfahren nach Anspruch 3, bei dem die relative Verschiebung zwischen dem Block und dem Austrittskopf Herumdrehen des Blockes (100) erfolgt.

5. Herstellungsverfahren nach einem der vorhergehenden Ansprüche, bei dem der Schritt des Abrasiv-Wasserstrahlschneidens derart durchgeführt wird, dass mindestens ein während eines Feinschneidens abgeschnittenes Stück durch die Schwerkraft automatisch von dem Block herabfällt.

6. Herstellungsverfahren nach einem der vorhergehenden Ansprüche, bei dem der Schritt des Abrasiv-Wasserstrahlschneidens derart durchgeführt wird, dass ein während eines Feinschneidens abgeschnittenes Stück, dass nach dem Schneiden in dem zugehörigen Zwischenschaufel-Zwischenraum verbleibt, durch Abrasiv-Wasserstrahlschneiden in mindestens zwei Teilstücke aufgespalten wird, die durch die Schwerkraft automatisch von dem Block herabfallen können.

7. Herstellungsverfahren nach einem der vorhergehenden Ansprüche, bei dem jedes Feinschneiden ein fünfachsiges Schneiden ist.

8. Herstellungsverfahren nach einem der vorhergehenden Ansprüche, bei dem der Schritt des Abrasiv-Wasserstrahlschneidens des Materialblocks derart durchgeführt wird, dass die Schaufel-Vorformen (102) erscheinen, die sich radial von der Nabe (4) aus erstrecken, wobei gleichzeitig Material erhalten bleibt, das Verbindungsmittel (112) zwischen mindestens zwei direkt aufeinander folgenden Schaufel-Vorformen bildet, wobei die Verbindungsmittel radial zu der Nabe beabstandet sind.

9. Herstellungsverfahren nach einem der vorhergehenden Ansprüche, bei dem das Verfahren ebenfalls folgendes aufweist:
- einen Schritt des Fräsens der Schaufel-Vorformen (102), um die Schaufel-Rohlinge (202) zu profilieren; und
- einen Schritt des Feinfräsens der Schaufel-Rohlinge (202), um die Schaufeln (2) mit Endprofil zu erhalten.

## Claims

1. A process for manufacturing a monobloc vaned disc (1), comprising a cutout step by abrasive water jet of a block of material (100) in general form of a disc, carried out so as to remove material from the block at the level of inter-vane spaces (110) to reveal vane preforms (102) extending radially from a hub (4), **characterised in that** said cutout step by abrasive water jet being comprises, for making each inter-vane space (110):
- a first triple-axis cutout of a piece (114a) passing through the thickness of the block (100), used such that said cutout piece escapes from the block (100) automatically by gravity; followed by
- at least one enhancement cutout.

2. The manufacturing process as claimed in Claim 1, in which said cutout step by abrasive water jet, carried out by means of a tool comprising an ejection head (116) of an abrasive water jet, comprises:
- said first cutout, carried out with said ejection head opposite a first face (110a) of the block; followed by
- several enhancement cutouts, whereof at least one is carried out with said ejection head opposite said first face (110a) of the block, and whereof at least another is carried out with said ejection head opposite a second face (110b) of the block, opposite the first.

3. The manufacturing process as claimed in Claim 2, in which, during said cutout step by abrasive water jet aiming to obtain all the inter-vane spaces, the following are successively carried out:
- all the cutouts with said ejection head opposite the first face of the block (110a);
- a relative shift between the block (100) and the ejection head (116) to guide the latter opposite the second face of the block; and
- all the cutouts with said ejection head opposite the second face (110b) of the block.

4. The manufacturing process as claimed in Claim 3, in which said relative shift between the block and the ejection head is made by turning over the block (100).

5. The manufacturing process as claimed in anyone of the preceeding claims, in which said cutout step by abrasive water jet is carried out such that at least during enhancement cutout one cutout piece escapes from the block automatically by gravity.

6. The manufacturing process as claimed in anyone of the preceeding claims, in which said cutout step by abrasive water jet is carried out such that, for at least one cutout piece during enhancement cutout and remaining blocked in its associated inter-vane space after its cutout, said piece is split, by cutting by abrasive water jet, into at least two sub-pieces capable of escaping from the block automatically by gravity.

7. The manufacturing process as claimed in anyone of the preceeding claims, in which each enhancement cutout is a five-axis cutout.

8. The manufacturing process as claimed in anyone of the preceeding claims, in which said cutout step by abrasive water jet of the block of material is carried out so as to reveal the vane preforms (102) extending radially from the hub (4), while preserving the material forming connecting means (112) between at least two directly consecutive vane preforms, said connecting means being spaced radially from said hub.

9. The manufacturing process as claimed in anyone of the preceeding claims, in which the process also comprises:
- a milling step of the vane preforms (102) carried out so as to obtain profiled vane blanks (202); and
- a finishing milling step of the vane blanks (202), so as to obtain the vanes (2) on the final profile.
